# EUROPÄISCHE PATENTSCHRIFT

(11) **EP 0 478 530 B1**
(45) Veröffentlichungstag und Bekanntmachung des Hinweises auf die Patenterteilung: **02.11.1994**
(21) Anmeldenummer: 91890190.1
(22) Anmeldetag: 27.08.1991
(51) Int. Cl.: B21F 33/00, B23D 23/00

(54) **Schneidanlage zum Abschneiden von Stücken wählbarer Länge von einem Gitterrost**
Shearing apparatus for severing sections of any desired length from a grating web
Cisaille pour le tronçonnage de grilles en tronçons de longueur choisie à volonté

(30) Priorität: 28.09.1990 AT 1967/90
(43) Veröffentlichungstag der Anmeldung: 01.04.1992
(73) Patentinhaber: EVG Entwicklungs- u. Verwertungs- Gesellschaft m.b.H., A-8074 Raaba (AT)
(72) Erfinder: Ritter, Gerhard, Dr. Dipl.-Ing., A-8043 Graz (AT); Ritter, Klaus, Dipl.-Ing., A-8042 Graz (AT); Jahrbacher, Gert, Dipl.-Ing., A-8120 Peggau 163 (AT); Fürndörfler, Peter, A-8052 Graz (AT)
(74) Vertreter: Holzer, Walter, Dipl.-Ing.

(56) Entgegenhaltungen:
- AT-B- 356 481
- DE-A- 2 439 185
- GB-A- 1 408 774
- GB-A- 2 029 752

## Beschreibung

Die Erfindung betrifft eine Schneidanlage zum Abschneiden von Stücken wählbarer Länge von einem Gitterrost, der aus parallelen Tragstäben und diese senkrecht kreuzenden, mit den Tragstäben verschweißten Querstäben besteht, mit einer Zuführeinrichtung für den Gitterrost, mit einer Schneidvorrichtung, die zum Durchtrennen der Tragstäbe einen quer zur Zuführrichtung verlaufenden feststehenden Führungsbalken und einen entlang einer Schnittebene in horizontaler Richtung relativ zum Führungsbalken bewegbaren Messerbalken aufweist, wobei der Führungsbalken und der Messerbalken kammartige Schneidzähne und kammartige Zahnlücken zur Aufnahme der Tragstäbe aufweisen, und mit einer Steuereinrichtung für die Zuführeinrichtung und die Schneidvorrichtung.

Aus der AT-PS 356.481 ist eine Anlage dieser Art bekannt, bei welcher der Führungs- und der Messerbalken in einem Gestell in vertikaler Richtung gemeinsam verstellbar sind. Der Nachteil dieser Konstruktion besteht darin, daß die Vertikalverstellung der beiden Balken aus der abgesenkten Ruhestellung in die angehobene Schneidstellung ein genau paralleles Heben und Senken beider Balken erfordert, um ein Verkanten derselben zu vermeiden. Weiterhin ist bei der bekannten Schere nachteilig, daß beim Durchtrennen der Tragstäbe die Schneidzähne vor allem am Grund der Zahnlücken einseitig belastet werden, wodurch bei kleiner Querstabteilung oder bei breiten Tragstäben und dadurch bedingter schmaler Schneidzahnbreite die Schneidezähne verbogen werden oder ausbrechen können.

Die Aufgabe der Erfindung besteht darin, eine Schneidanlage der einleitend angegebenen Art zu schaffen, die es einerseits ermöglicht, den Führungsbalken und den Messerbalken exakt in die Arbeitsstellung zu bewegen und anderseits den Gitterrost präzise in die Schneidvorrichtung zu befördern und in dieser zum Schnitt festzulegen, wobei gleichzeitig die Gefahr einer Verformung bzw. Beschädigung der Schneidwerkzeuge beim Schnitt unter der Wirkung der auftretenden Scherkräfte vermieden werden soll.

Die erfindungsgemäße Schneidanlage zeichnet sich dadurch aus, daß ein Anschlag für den Anfang des zugeführten Gitterrostes vorgesehen ist, der in Vorschubrichtung des Gitterrostes vor der Schnittebene in eine durch die Oberkante der Tragstäbe des Gitterrostes bestimmte Vorschubebene schwenkbar ist, daß eine zusätzliche Vorschubeinrichtung vorgesehen ist, mit welcher der Gitterrost aus einer durch den Anschlag bestimmten Null-Stellung relativ zur Schnittebene positionierbar ist und daß der Führungsbalken und der Messerbalken der Schneidvorrichtung aus einer Ruhestellung außerhalb der Vorschubebene in eine im Bereich der Vorschubebene liegende Arbeitsstellung schwenkbar sind, in welcher sie mit einer in der Schnittebene höhenverstellbar angeordneten Stützvorrichtung für den Führungsbalken und den Messerbalken in Eingriff versetzbar sind.

Gemäß einer bevorzugten Ausführungsform der Erfindung weist die Stützvorrichtung einen feststehenden Stützbalken und einen beweglichen Stützbalken mit jeweils kammartig ausgebildeten, in die zugeordneten Zahnlücken des Führungsbalkens und des Messerbalkens der Schneidvorrichtung eingreifenden, im wesentlichen bis zur Vorschubebene reichenden Zähnen auf, wobei die Bewegung des beweglichen Stützbalkens mit jener des Messerbalkens zum Durchtrennen der Tragstäbe kuppelbar und die Zähne des Führungsbalkens und des Messerbalkens an den entsprechenden Zähnen der Stützbalken abstützbar sind.

Durch die Erfindung wird jede Bewegungsungenauigkeit des Führungs- und des Messerbalkens vermieden. Der Gitterrost kann jeweils genau in die gewünschte Schnittposition versetzt werden und es wird vorteilhaft jede Überbeanspruchung der Schneidwerkzeuge vermieden, so daß ein exakter Schnitt vorgenommen werden kann.

Weitere Merkmale der Erfindung werden nachfolgend an einem Ausführungsbeispiel unter Bezugnahme auf die Zeichnungen näher beschrieben. Es zeigen:
Fig. 1 in Seitenansicht eine Schneidanlage nach der Erfindung;
Fig. 2 ein Detail eines Führungsbalkens, eines Messerbalkens und zugeordneter Stützbalken sowie eine Einstellund Fixiereinrichtung für die Stützbalken, jeweils in Vorschubrichtung des Gitterrostes gesehen;
Fig. 3 in einem vergrößerten Detail das Eingreifen der Schneidzähne des Führungsbalkens und des Messebalkens in die Zähne der Stützbalken;
Fig. 4 ebenfalls eine Seitenansicht der Schneidanlage, wobei die Schneidvorrichtung in abgesenkter Ruhestellung sowie eine Vorrichtung zum Abtransport von Rostabfallstücken dargestellt sind.

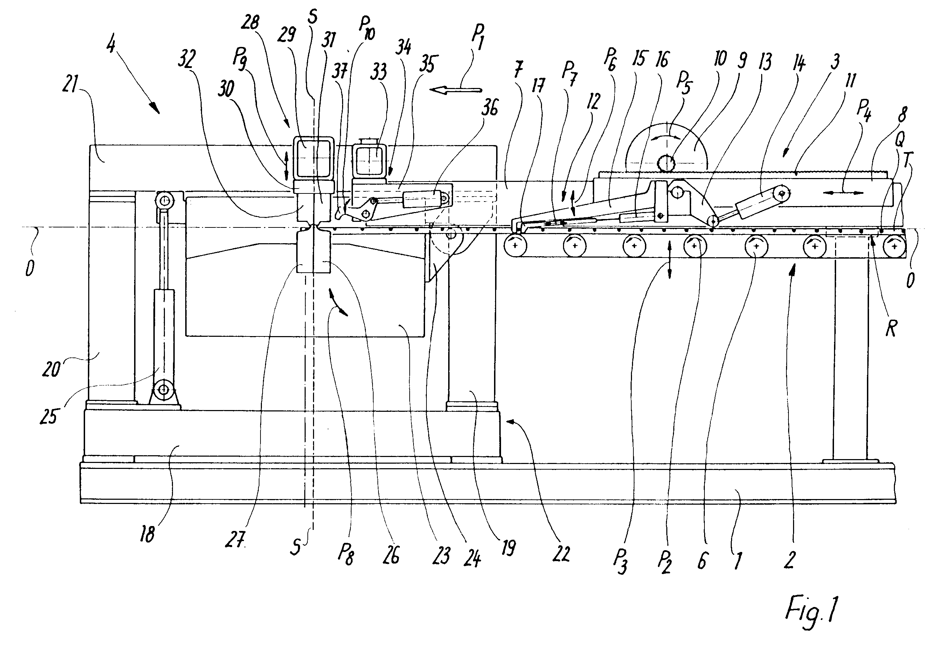

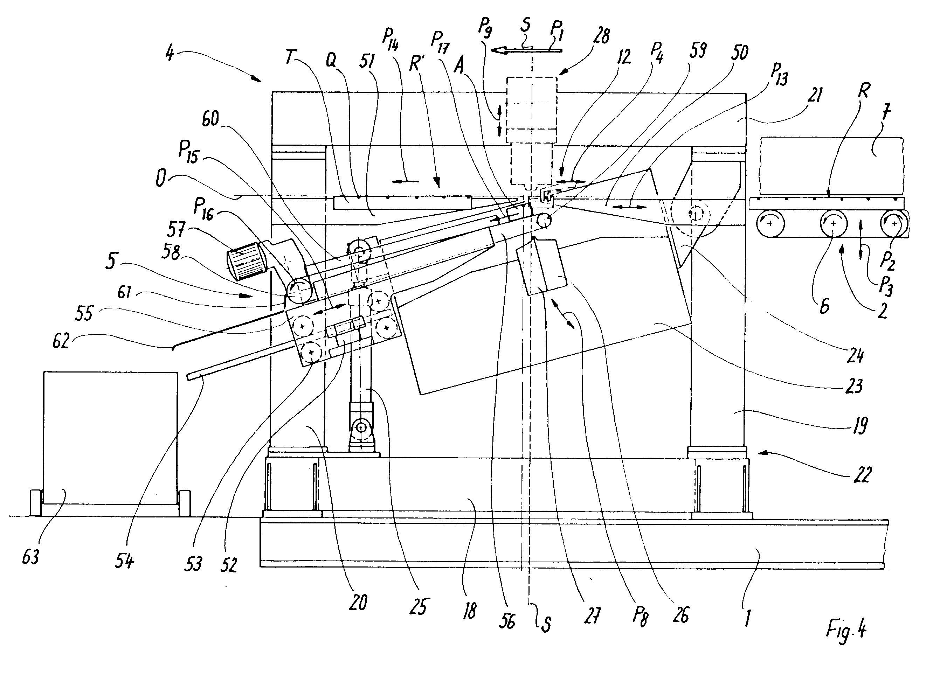

Wie in Fig. 1 dargestellt ist, weist die Schneidanlage ein Maschinengestell 1 auf, auf dem ein angetriebener, höhenverstellbarer Rollgang 2 und eine Vorschubeinrichtung 3 zum Zuführen eines abzulängenden Gitterrostes R entsprechend der Vorschubrichtung P₁ zu einer ebenfalls auf dem Maschinengestell 1 montierten Schneidvorrichtung 4 angeordnet sind. Zur Schneidanlage gehört außerdem noch eine in Fig. 1 weggelassene, jedoch in Fig. 4 dargestellte Fördereinrichtung 5 zum Abtransport von Gitterrostreststücken A.

Der Gitterrost R besteht aus im Abstand parallel verlaufenden, aus Flachstahlbändern gebildeten Tragstäben T und aus senkrecht zu diesen verlaufenden Querstäben Q, die mit den Flachstäben verschweißt, vorzugsweise in diese eingeschweißt sind. Der gegenseitige Abstand der Querstäbe Q wird bereits bei der Herstellung des Gitterrostes zweckmäßig derart gewählt, daß entsprechend der gewünschten abzulängenden Gitterrostlänge ein Einführen der später beschriebenen Schneidwerkzeuge in die Querstablücken möglich ist. Die Oberkante der Tragstäbe T legt eine höhenkonstante Vorschubebene O-O fest. Der Rollgang 2 weist in Richtung des Pfeiles P₂ antreibbare Tragrollen 6 auf, die aus später dargelegten Gründen mit einem Freilauf versehen sein müssen. Der Rollgang 2 ist entsprechend dem Doppelpfeil P₃ höhenverstellbar, um zu gewährleisten, daß bei unterschiedlichen Tragstabhöhen die Oberkante der Tragstäbe immer in der Vorschubebene O-O liegt. Außerdem besitzt der Rollgang 2 eine nicht dargestellte Seitenführung für den Gitterrost R.

Die Vorschubeinrichtung 3 weist einen auf einem Fahrbahnträger 7 entsprechend dem Doppelpfeil P₄ verschiebbaren Wagen 8 auf. Zum Antrieb des Wagens 8 ist ein Antriebsmotor 9 vorgesehen, dessen entsprechend dem Doppelpfeil P₅ drehbares Antriebsritzel 10 mit einer mit dem Wagen 8 fest verbundenen Zahnstange 11 kämmt. Die Bewegungen des Wagens 8 werden mit Hilfe eines nicht dargestellten Wegmeßsystems, beispielsweise einem mit dem Antriebsritzel 10 verbundenen Drehwinkelgeber, gemessen. Die Steuerung der Bewegungen des Wagens 8 erfolgt über eine nicht dargestellte Steuereinrichtung.

Auf dem Wagen 8 ist eine Greifvorrichtung angeordnet, die aus einer schwenkbaren Greifzange 12, einem Schwenkhebel 13 und einem die Schwenkung der Greifzange 12 bewirkenden Arbeitszylinder 14 besteht. Die Greifzange 12 weist einen Greifhaken 15 und einen mit Hilfe eines Arbeitszylinders 16 in Richtung des Doppelpfeiles P₇ bewegbaren Klemmhaken 17 zum Festklemmen eines Querstabes Q auf.

Die Schneidvorrichtung 4 weist ein aus einem Grundrahmen 18, einlaufseitig angeordneten Stehern 19, auslaufseitig angeordneten Stehern 20 und einem oberen Rahmen 21 gebildetes ortsfestes Gestell 22 auf. Ein sich quer zur Vorschubrichtung P₁ über die gesamte Vorrichtungsbreite erstreckender Schneidbalken 23 ist auf jeder Vorrichtungsseite mittels je einer Schwenklagerung 24 mit dem Gestell 22 verbunden und kann mit Hilfe von auf beiden Vorrichtungsseiten am Grundrahmen 18 abgestützten Arbeitszylindern 25 entsprechend dem Doppelpfeil P₈ aus der in Fig. 4 gezeigten Ruhestellung in die in Fig. 1 dargestellte Arbeitsstellung bzw. Schneidstellung in den Bereich der Vorschubebene O-O geschwenkt werden.

Der Schneidbalken 23 trägt einen horizontalen, sich quer zur Vorschubrichtung P₁ über die gesamte Vorrichtungsbreite erstreckenden, mit dem Schneidbalken fest verbundenen Führungsbalken 26 sowie einen horizontalen, relativ zum Führungsbalken bewegbaren, sich ebenfalls über die gesamte Vorrichtungsbreite erstreckenden Messerbalken 27. Wie später noch erläutert wird, wirkt mit dem Führungsbalken 26 und mit dem Messerbalken 27 eine allgemein mit 28 bezeichnete Stützvorrichtung zusammen. Die Stützvorrichtung 28 weist einen am oberen Rahmen 21 des Gestells 22 in Richtung des Doppelpfeiles P₉ höhenverstellbar angebrachten Träger 29, eine sich quer zur Vorschubrichtung P₁ über die gesamte Vorrichtungsbreite erstreckende Führung 30 für einen feststehenden, sich über die gesamte Vorrichtungsbreite streckenden, horizontalen Stützbalken 31 und für einen quer zur Vorschubrichtung P₁ bewegbaren, sich ebenfalls über die gesamte Vorrichtungsbreite erstreckenden horizontalen Stützbalken 32 auf.

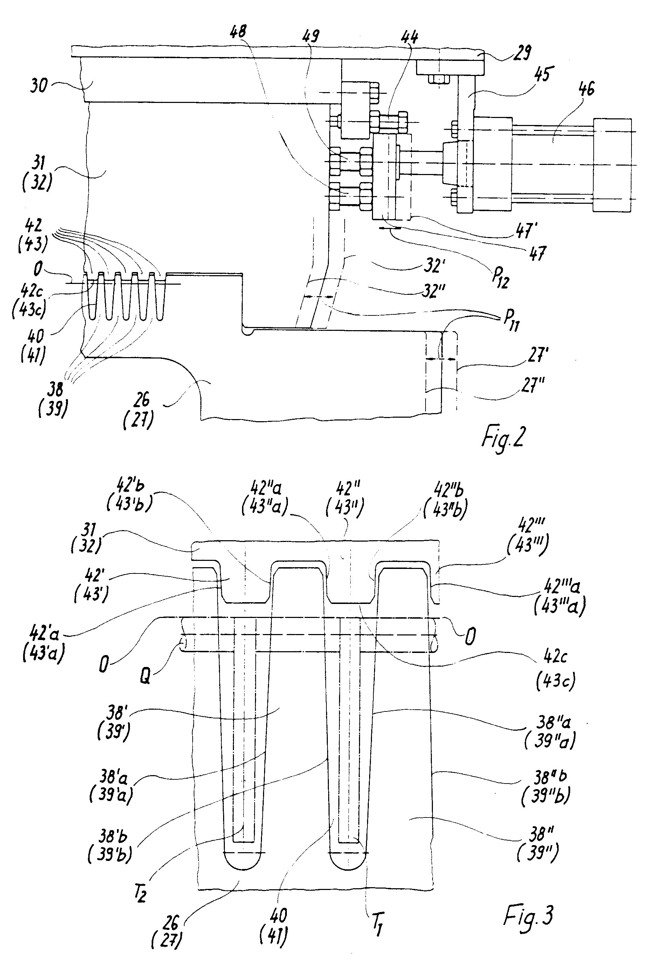

Die zum Durchtrennen der Tragstäbe T des Gitterrostes R auszuführende Schneidbewegung des Messerbalkens 27 entsprechend dem Doppelpfeil P₁₁ (Fig. 2) wird von nicht dargestellten, senkrecht zur Vorschubrichtung P₁ auf beide Enden des Messerbalkens 27 einwirkenden Arbeitszylindern bewirkt. Hiebei wird nach jedem erfolgten Schnitt der Messerbalken 27 wieder in die Ausgangslage zurückgestellt. Durch die Trennebene zwischen dem Führungsbalken 26 und dem Messerbalken 27 wird eine senkrecht zur Vorschubebene O-O und senkrecht zur Zeichenebene stehende Schnittebene S-S definiert.

Ein am oberen Rahmen 21 des Gestells 22 in Vorschubrichtung vor der Schnittebene S-S angebrachter horizontaler Querträger 33 trägt eine Anschlageinrichtung 34. Diese weist eine Konsole 35 und einen mittels Arbeitszylindern 36 entsprechend dem Doppelpfeil P₁₀ in die Vorschubebene O-O schwenkbaren Anschlaghebel 37 auf. Die zum Führen des Gitterrostes R in der Schneidvorrichtung 4 notwendigen Einrichtungen sind in Fig. 1 der Übersicht halber weggelassen und in Fig. 4 dargestellt.

In Fig. 2 ist, in Vorschubrichtung P₁ gesehen, ein Detail des Führungsbalkens 26, des Messerbalkens 27 und der Stützbalken 31, 32 sowie eine Justier- und Fixiereinrichtung für die Stützbalken dargestellt. Die Bezugszeichen der entsprechenden, nicht sichtbaren Elemente, die deckungsgleich hinter den sichtbaren Elementen liegen, sind in Klammern angegeben. Der Führungsbalken 26 und der Messerbalken 27 weisen an ihren oberen, den Stützbalken 31, 32 zugewandten Schmalseiten kammartig ausgebildete Schneidzähne 38, 39 auf. Die Anzahl dieser Zähne und die Anzahl von die Tragstäbe vor dem Schnitt aufnehmenden Zahnlücken 40 bzw. 41 ist an die maximale Anzahl der Tragstäbe T und an den kleinstmöglichen Tragstababstand angepaßt.

Der feststehende und der bewegliche Stützbalken 31 bzw. 32 besitzen an ihren unteren, dem Führungsbalken 26 und dem Messerbalken 27 zugewandten Schmalseiten Zähne 42 bzw. 43, die derart angeordnet und ausgebildet sind, daß sie mit Spiel in die jeweiligen Zahnlücken 40 bzw. 41 der entsprechenden Schneidzähne 38 bzw. 39 des Führungsbalkens 26 und des Messerbalkens 27 eingreifen und mit ihren Unterkanten 42c bzw. 43c im wesentlichen bis zur Vorschubebene O-O der Oberkanten der Tragstäbe T reichen.

Die Höhenverstellbarkeit der Stützvorrichtung 28 entsprechend dem Doppelpfeil P₉ (Fig. 1) ermöglicht einerseits das genaue Einjustieren der Zahnunterkanten 42c bzw. 43c relativ zur Vorschubebene O-O, anderseits können für den Fall, daß die Querstäbe Q auf den Oberkanten der Tragstäbe T aufgeschweißt sind, die Stützvorrichtung 28 und damit die Zähne 42, 43 aus der Vorschubbahn der Querstäbe gehoben werden. Im Rahmen der Erfindung ist es möglich, die Schneidbewegung, d.h. die Bewegung des Messerbalkens 27 relativ zum Führungsbalken 26 entsprechend dem Doppelpfeil P₁₁ in Vorschubrichtung P₁ gesehen, sowohl nach rechts als auch nach links auszuführen. Hiebei folgt der bewegliche Stützbalken 32 dieser Schneidbewegung des Messerbalkens 27, weil er mit diesem durch das Ineinandergreifen der Zähne 43 in die Zahnlücken 41 der Schneidzähne 39 des Messerbalkens 27 zwangsweise gekoppelt ist. Die entsprechenden rechten und linken Endlagen des Messerbalkens 27 bzw. des beweglichen Stützbalkens 32 nach erfolgtem Schnitt und vor der Rückstellung in die Ausgangslage sind in Fig. 2 gestrichelt mit 27′ und 27˝ bzw. mit 32′ und 32˝ angedeutet.

Zu beiden Seiten der Führung 30 sind Stellschrauben 44 angebracht, die ein genaues Einjustieren des feststehenden Stützbalkens 31 relativ zum Führungsbalken 26 ermöglichen.

Zu beiden Seiten des Querträgers 29 ist je eine Lagerplatte 45 angeordnet, die einen Arbeitszylinder 46 trägt. Mit der entsprechend dem Doppelpfeil P₁₂ bewegbaren Kolbenstange des Arbeitszylinders 46 ist eine Aufnahme 47 fest verbunden, die einen einstellbaren Anschlag 48 für den feststehenden Stützbalken 31 und einen ebenfalls einstellbaren Anschlag 49 für den beweglichen Stützbalken 32 aufweist. Bei von der Vorschubebene O-O weggeschwenktem Schneidbalken 23 ist der bewegliche Stützbalken 32 nicht mehr fixiert und könnte sich daher beispielsweise in der rechten Position 32′ befinden, so daß die Aufnahme 47 die entsprechende rechte Position 47′ einnimmt. In diesem Fall sind die Zähne 42 des feststehenden Stützbalkens 31 nicht mehr deckungsgleich mit den Zähnen 43 des beweglichen Stützbalkens 32, wodurch ein Ineinandergreifen der Zähne 43 und der Zahnlücken 41 des Messerbalkens 27 und damit ein Zurückschwenken des Schneidbalkens 23 in die Schneidstellung unmöglich wäre. Mit Hilfe des Arbeitszylinders 46 wird der bewegliche Stützbalken 32 in genau deckungsgleiche Lage mit dem feststehenden Stützbalken 31 gebracht und dort fixiert, so daß gewährleistet ist, daß beim Zurückschwenken des Schneidbalkens 23 in die Schneidstellung die. Zähne 43 des beweglichen Stützbalkens 32 in die Zahnlücken 41 des Messerbalkens 27 eingreifen können.

In Fig. 3 sind zwei Tragstäbe T₁, T₂, ein Querstab Q und die Vorschubebene O-O strichliert eingezeichnet. Analog zur Bezeichnung in Fig. 2 sind die Bezugszeichen der nicht sichtbaren Elemente, die deckungsgleich hinter den sichtbaren Elementen liegen, in Klammern angegeben. Der Ausschnitt zeigt zwei dem Tragstab T₁ benachbarte Schneidzähne 38′ und 38˝ des Führungsbalkens 26 mit den dahinterliegenden deckungsgleichen Schneidzähnen 39′ und 39˝ des Messerbalkens 27, die beim Durchtrennen des Tragstabes T₁ zusammenwirken. Außerdem sind benachbarte Zähne 42′, 42˝, 42˝′ des feststehenden Stützbalkens 31 mit den dahinterliegenden, deckungsgleichen Zähnen 43′, 43˝ und 43˝′ des beweglichen Stützbalkens 32 dargestellt.

Die Schneidzähne 38′, 38˝ bzw. 39′, 39˝ besitzen, in Vorschubrichtung P₁ gesehen, linke Schneidkanten 38′a, 38˝a bzw. 39′a, 39˝a und rechte Schneidkanten 38′b, 38˝b bzw. 39′b, 39˝b.

Analog hiezu besitzen die Zähne 42′, 42˝, 42˝′ bzw. 43′, 43˝, 43˝′ linke Zahnflanken 42′a, 42˝a, 42˝′a bzw. 43′a, 43˝a, 43˝′a und rechte Zahnflanken 42′b, 42˝b, 42˝′b bzw. 43′b, 43˝b, 43˝′b. Beim Durchtrennen des Tragstabes T₁ durch eine in Vorschubrichtung P₁ gesehen beispielsweise nach links erfolgende Schnittbewegung des Messerbalkens 27 stützt sich der oberhalb der Vorschubebene O-O liegende Bereich der linken Schneidkante 38′a des Schneidzahnes 38′ des Führungsbalkens 26 an der rechten Zahnflanke 42′b des Zahnes 42′ des feststehenden Stützbalkens 31 und außerdem der oberhalb der Vorschubebene O-O liegende Bereich der rechten Schneidkante 39˝b des Schneidzahnes 39˝ des Messerbalkens 27 an der linken Zahnflanke 43˝′a des Zahnes 43˝′ des beweglichen Stützbalkens 32 ab. Dies gilt analog für das Durchtrennen aller Tragstäbe des Gitterrostes, so daß sich jeweils der oberhalb der Vorschubebene O-O liegende Bereich sowohl der Schneidzähne 38 des Führungsbalkens 26 als auch der Schneidzähne 39 des Messerbalkens 27 an den entsprechenden Zähnen 42 bzw. 43 der Stützbalken 31 bzw. 32 abstützen können. Die Länge aller Zähne wird derart gewählt, daß sich eine optimale Stützfläche zwischen den Schneidzähnen und den Stützbalkenzähnen zur Aufnähme der maximal auftretenden Biegekräfte beim Durchtrennen der Tragstäbe ergibt. Durch diese Anordnung und Ausbildung der Schneidzähne des Führungs- und Messerbalkens sowie der Zähne der Stützbalken werden die beim Durchtrennen der Tragstäbe auftretenden Kräfte gleichmäßig über die Schneidzähne verteilt und es wird vor allem eine Abstützung des freien Endes der Schneidzähne geschaffen, so daß ein Verbiegen oder Ausbrechen der Schneidzähne verhindert wird.

Die Unterkanten der Stützbalkenzähne sind außerdem derart gestaltet und einjustiert, daß sich die Oberkanten der Tragstäbe T beim Schnitt an den Unterkanten der Zähne abstützen können, wodurch ein Ausweichen des Gitterrostes R beim Schnitt in vertikaler Richtung verhindert wird.

In Fig. 4 ist der Schneidbalken 23 in abgesenkter Ruhestellung gezeigt. Die Stützvorrichtung 28 und die Greifzange 12 sind nur schematisch angedeutet. In der Schneidvorrichtung 4 wird der zu schneidende Gitterrost R durch eine entsprechend dem Doppelpfeil P₁₃ verschiebbare Gleitführung 50 bis in die Schnittebene S-S geführt, während der abgelängte Gitterrost R′ entlang einer entsprechenden auslaufseitig angeordneten Gleitführung 51 in Richtung des Pfeiles P₁₄ abgeführt wird. Etwaige Gitterrostabfallstücke A, die beim Beschneiden des Gitterrostanfanges bzw. Gitterrostendes anfallen und Gitterrostreststücke, die nicht mehr abgelängt werden können, werden mit Hilfe der Fördereinrichtung 5 aus der Schneidvorrichtung 4 gebracht. Hiebei muß jedes Gitterrostabfallstück A mit zumindest einem Querstab versehen sein, um von der Greifzange 12 erfaßt werden zu können.

Ein mit Hilfe einer Verschiebevorrichtung 52 und Laufrollen 53 entsprechend dem Doppelpfeil P₁₅ auf einer mit dem Gestell 22 fest verbundenen Fährbahn 54 verschiebbarer Fahrwagen 55 trägt ein Förderband 56, das über eine mit Hilfe eines Antriebsmotors 57 in Richtung des Pfeiles P₁₆ antreibbare Antriebswalze 58 und eine Umlenkrolle 59 geführt ist. Nach dem Abtrennen des Gitterrostabfallstückes A wird der Querdraht dieses Abfallstückes erneut von der Greifzange 12 erfaßt, der Schneidbalken 23 in seine Ruhestellung geschwenkt, die einlaufseitige Gleitführung 50 entgegen der Vorschubrichtung P₁ zurückgezogen und das Förderband 56 bis zur Schnittebene S-S vorgeschoben. Die Greifzange 12 wirft das Gitterrostabfallstück A auf das Förderband 56 ab, welches das Gitterrostabfallstück A entsprechend dem Pfeil P₁₇ und zusätzlich durch eine Seitenführung 60 geführt abtransportiert. Vom Förderband 56 gelangt das Gitterrostabfallstück A über einen Abstreifer 61 und eine Gleitbahn 62 in einen Gitterrostabfallbehälter 63. Nach dem Abtransport des Gitterrostabfallstückes A wird das Förderband 56 mit Hilfe des Fahrwagens 55 wieder zurückgezogen, um den Bewegungsablauf des Schneidbalkens 23 nicht zu behindern.

Die Schneidanlage arbeitet in folgender Weise: Von einem Vorrat kommend wird der Gitterrost R mit Hilfe des Rollganges 2 so weit in die Schneidvorrichtung 4 gefördert, bis der vorderste Querstab Q des Gitterrostes R an dem in die Vorschubebene O-O geschwenkten Anschlaghebel 37 stößt. Durch diesen mechanischen Anschlag ist eine eindeutige Ausgangsstellung des Gitterrostes R für alle anschließenden weiteren Positionierbewegungen in die Schnittebene S-S gegeben. Der Wagen 8 der Vorschubeinrichtung 3 wird nunmehr aus seiner der Schneidvorrichtung 4 abgewandten Ausgangslage so weit verschoben, bis die Greifzange 12 den nächstliegenden Querstab Q erfassen kann. Die Greifzange 12 schwenkt zu diesem Zweck nach unten und erfaßt durch Schließen des Klemmhakens 17 diesen Querstab Q.

Die durch den Querstab Q definierte Ausgangslage der Greifzange 12 definiert die Ausgangsstellung für alle nun folgenden Positionierbewegungen des Wagens 8 und wird als Null-Stellung in die die Bewegungen des Wagens 8 steuernde elektronische Steuereinrichtung eingegeben. In der Steuereinrichtung sind ferner die vorgegebene Querstabteilung des abzulängenden Gitterrostes sowie das gewünschte Schnittprogramm gespeichert.

Der Anschlaghebel 37 schwenkt sodann in seine in Fig. 1 dargestellte, oberhalb der Vorschubebene O-O liegende Ausgangslage zurück, um den Vorschub des Gitterrostes R zu ermöglichen. Der Wagen 8 schiebt den Gitterrost R über die nunmehr freilaufenden Tragrollen 6 des Rollganges 2 und die einlaufseitige Gleitführung 50 so lange in Vorschubrichtung P₁ vor, bis die Schnittpositionen zum Glattschneiden des Gitterrostanfanges, zum Ablängen des Gitterrostes oder zum Glattschneiden des Gitterrostendes mit der Schnittebene S-S übereinstimmen. Der Schneidbalken 23 schwenkt sodann in seine Schneidstellung in der Vorschubebene O-O und die Greifzange 12 wird leicht geöffnet, um zu vermeiden, daß sie durch etwaige während des Durchtrennens der Tragstäbe auftretende Verschiebung des Gitterrostes deformiert wird. Nach dem Durchtrennen der Tragstäbe T schwenkt der Schneidbalken 23 in seine in Fig. 4 dargestellte Ruhestellung zurück, wodurch der Weg für den Vorschub des Gitterrostes R mit Hilfe des Wagens 8 in eine neue Schnittposition freigegeben wird. Die Greifzange 12 ergreift erneut einen Querstab Q, gegebenenfalls nachdem der Wagen 8 in die Null-Stellung zurückgefahren ist, und der Wagen 8 bringt den Gitterrost R zum Ablängen des folgenden Gitterroststückes in eine neue Schnittposition. Die oben geschilderten Vorgänge wiederholen sich so lange, bis alle abzulängenden Gitterroststücke R′ abgeschnitten worden sind.

Ein etwa anfallendes Reststück bzw. Abfallstück A des Gitterrostes wird mit Hilfe der Fördereinrichtung 5 abtransportiert, nachdem diese in die in Fig. 4 dargestellte Arbeitsstellung gebracht worden war, wobei das Förderband 56 hiebei mit seinem das Abfallstück A übernehmenden Ende über die Schnittebene S-S hinausragen und vorzugsweise bis knapp unter die Vorschubebene O-O reichen sollte.

Es versteht sich, daß die erläuterte Schneidanlage im Rahmen der beiliegenden Patentansprüche verschiedentlich abgewandelt werden kann und nicht auf das erläuterte Ausführungsbeispiel beschränkt ist.

## Patentansprüche

1. Schneidanlage zum Abschneiden von Stücken wählbarer Länge von einem Gitterrost (R), der aus parallelen Tragstäben (T) und diese senkrecht kreuzenden, mit den Tragstäben verschweißten Querstäben (Q) besteht, mit einer ersten Vorschubeinrichtung (2) für den Gitterrost, mit einer Schneidvorrichtung (4), die zum Durchtrennen der Tragstäbe einen quer zur Vorschubrichtung verlaufenden feststehenden Führungsbalken (26) und einen entlang einer Schnittebene (S-S) in horizontaler Richtung relativ zum Führungsbalken bewegbaren Messerbalken (27) aufweist, wobei der Führungsbalken (26) und der Messerbalken (27) kammartige Schneidzähne (38, 39) und kammartige Zahnlücken (40, 41) zur Aufnahme der Tragstäbe aufweisen, und mit einer Steuereinrichtung für die Vorschubeinrichtung und die Schneidvorrichtung, dadurch gekennzeichnet, daß ein Anschlag (37) für den Anfang des zugeführten Gitterrostes (R) vorgesehen ist, der in Vorschubrichtung des Gitterrostes vor der Schnittebene (S-S) in eine durch die Oberkante der Tragstäbe (T) des Gitterrostes (R) bestimmte Vorschubebene (O-O) schwenkbar ist, daß eine zusätzliche zweite Vorschubeinrichtung (3) vorgesehen ist, mit welcher der Gitterrost (R) aus einer durch den Anschlag (37) bestimmten Null-Stellung relativ zur Schnittebene (S-S) positionierbar ist und daß der Führungsbalken (26) und der Messerbalken (27) der Schneidvorrichtung (4) aus einer Ruhestellung außerhalb der Vorschubebene in eine im Bereich der Vorschubebene (O-O) liegende Arbeitsstellung schwenkbar sind, in welcher sie mit einer in der Schnittebene (S-S) höhenverstellbar angeordneten Stützvorrichtung (28) für den Führungsbalken (26) und den Messerbalken (27) in Eingriff versetzbar sind.

2. Schneidanlage nach Anspruch 1, dadurch gekennzeichnet, daß die Stützvorrichtung (28) einen feststehenden Stützbalken (31) und einen beweglichen Stützbalken (32) mit jeweils kammartig ausgebildeten, in die zugeordneten Zahnlücken (40; 41) des Führungsbalkens (26) und des Messerbalkens (27) der Schneidvorrichtung (4) eingreifenden, im wesentlichen bis zur Vorschubebene (O) reichenden Zähnen (42; 43) aufweist, wobei die Bewegung des beweglichen Stützbalkens (32) mit jener des Messerbalkens (27) zum Durchtrennen der Tragstäbe (T) kuppelbar und die Zähne (38; 39) des Führungsbalkens (26) und des Messerbalkens (27) an den entsprechenden Zähnen (42; 43) der Stützbalken (31; 32) abstützbar sind.

3. Schneidanlage nach Anspruch 2, dadurch gekennzeichnet, daß die Unterkanten (42c; 43c) der Zähne (42; 43) der Stützbalken (31; 32) Stützflächen für die Tragstäbe (T) beim Durchtrennen derselben bilden.

4. Schneidanlage nach Anspruch 2 oder 3, dadurch gekennzeichnet, daß der feststehende Stützbalken (31) eine Einrichtung (44) zum Einstellen seiner Lage relativ zum Führungsbalken (26) aufweist und daß der bewegliche Stützbalken (32) eine Einstell- und Fixiereinrichtung (45, 46, 47, 48) zum Einstellen und Fixieren seiner Lage relativ zum feststehenden Stützbalken (31) und zum Messerbalken (27) aufweist.

5. Schneidanlage nach einem der Ansprüche 1 bis 4, dadurch gekennzeiehnet, daß die erste Vorschubeinrichtung als höhenverstellbarer, mit in Vorschubrichtung frei laufenden Tragrollen (6) versehener, antreibbarer Rollgang (2) ausgebildet ist.

6. Schneidanlage nach einem der Ansprüche 1 bis 5, dadurch gekennzeichnet, daß zum Abtransport von beim Ablängen des Gitterrostes (R) anfallenden Gitterrostreststücken (A) eine Fördereinrichtung (56) vorgesehen ist, die zumindest bis in die Schnittebene (S-S) vorschiebbar ist.

7. Schneidanlage nach Anspruch 6, dadurch gekennzeichnet, daß die Fördereinrichtung durch ein angetriebenes Förderband (56) gebildet ist, das auf einem Fahrwagen (55) angeordnet ist, der längs einer mit einem Gestell (22) der Schneidvorrichtung (4) fest verbundenen Fahrbahn (54) bewegbar und mittels der Steuereinrichtung steuerbar ist.

## Claims

1. Cutting apparatus for cutting off pieces of selectable length from a grating (R) which consists of parallel supporting rods (T) and transverse rods (Q) perpendicularly intersecting the latter and welded to the supporting rods, with a first advance mechanism (2) for the grating, with a cutting device (4) which for cutting through the supporting rods comprises a stationary guide bar (26) extending transversely to the direction of advance and a blade-carrying rail (27) movable along a cutting plane (S-S) in a horizontal direction relative to the guide bar, wherein the guide bar (26) and the blade-carrying rail (27) comprise comb-like cutting teeth (38, 39) and comb-like tooth gaps (40, 41) for receiving the supporting rods, and with a control device for the advance mechanism and the cutting device, characterised in that a stop (37) is provided for the beginning of the delivered grating (R), which is pivotable in the direction of advance of the grating in front of the cutting plane (S-S) into a plane of advance (O-O) determined by the upper edge of the supporting rods (T) of the grating (R), in that an additional second advance mechanism (3) is provided with which the grating (R) from a zero position determined by the stop (37) can be positioned relative to the cutting plane (S-S) and in that the guide bar (26) and the blade-carrying rail (27) of the cutting device (4) are pivotable out of an inoperative position outside the plane of advance into an operative position located in the region of the plane of advance (O-O), in which they can be brought into engagement with a supporting device (28) arranged with adjustable height in the cutting plane (S-S) for the guide bar (26) and the blade-carrying rail (27).

2. Cutting apparatus according to claim 1, characterised in that the supporting device (28) comprises a stationary supporting bar (31) and a movable supporting bar (32) each with teeth (42; 43) of comb-like construction engaging in the associated tooth gaps (40; 41) of the guide bar (26) and blade-carrying rail (27) of the cutting device (4) and extending essentially as far as the plane of advance (O), wherein the movement of the movable supporting bar (32) can be coupled to that of the blade-carrying rail (27) for cutting through the supporting rods (T), and the teeth (38; 39) of the guide bar (26) and blade-carrying rail (27) can be supported on the corresponding teeth (42; 43) of the supporting bars (31; 32).

3. Cutting apparatus according to claim 2, characterised in that the lower edges (42c; 43c) of the teeth (42; 43) of the supporting bars (31; 32) form supporting surfaces for the supporting rods (T) when cutting through them.

4. Cutting apparatus according to claim 2 or 3, characterised in that the stationary supporting bar (31) comprises a device (44) for adjusting its position relative to the guide bar (26) and in that the movable supporting bar (32) comprises an adjusting and fixing device (45, 46, 47, 48) for adjusting and fixing its position relative to the stationary supporting bar (31) and to the blade-carrying rail (27).

5. Cutting apparatus according to any of claims 1 to 4, characterised in that the first advance mechanism is constructed as a drivable roller table (2) of adjustable height provided with supporting rollers (6) which run freely in the direction of advance.

6. Cutting apparatus according to any of claims 1 to 5, characterised in that for removal of remaining grating pieces (A) produced when cutting the grating (R) into lengths, there is provided a conveying device (56) which can be advanced at least as far as the cutting plane (S-S).

7. Cutting apparatus according to claim 6, characterised in that the conveying device is formed by a driven conveyor belt (56) which is arranged on a carriage (55) which is movable along a track (54) rigidly connected to a stand (22) of the cutting device (4) and controllable by means of the control device.

## Revendications

1. Dispositif de cisaillage destiné à tronçonner des éléments de longueur souhaitée d'une grille (R), qui consiste en des barres porteuses parallèles (T) et croisant celles-ci verticalement des barres transversales (Q) soudées aux barres porteuses, avec un premier dispositif d'amenée ou d'avance (2) pour la grille, comportant un dispositif de cisaillage (4) qui comporte pour le tronçonnage des barres porteuses une barre de guidage (26) fixe se déplaçant transversalement au dispositif d'avance et une barre porte-lame (27) mobile le long d'un plan de coupe (S-S) dans la direction horizontale par rapport à la barre de guidage, la barre de guidage (26) et la barre porte-lame (27) présentant des dents de coupe en forme de peigne (38, 39) et des entredents en forme de peigne (40, 41) servant à recevoir les barres porteuses, et comportant un système de commande pour le dispositif d'avance et le dispositif de coupe, caractérisé en ce qu'il est prévu une butée (37) pour l'amorce de la grille (R) amenée qui est pivotante ou basculante dans le dispositif d'amenée de la grille devant le plan de coupe (S-S) dans un plan d'avance (O-O) déterminé par le bord supérieur des barres porteuses (T) de la grille (R), en ce qu'un dispositif d'avance supplémentaire (3) est prévu permettant de positionner la grille (R) à partir d'une position zéro déterminée par la butée (37) par rapport au plan de coupe (S-S) et en ce que la barre de guidage (26) et la barre porte-lame (27) du dispositif de cisaillage (4) sont basculantes à partir d'une position de repos à l'extérieur du plan d'avance dans une position de travail située au niveau du plan d'avance (O-O), dans lequel elles peuvent être déplacées à l'aide d'un dispositif de support (28) agencé dans le plan de coupe (S-S) réglable en hauteur pour la barre de guidage (26) et la barre porte-lame (27) en engagement.

2. Dispositif de cisaillage selon la revendication 1, caractérisé en ce que le dispositif de support (28) comporte une barre de support fixe (31) et une barre de support mobile (32) avec respectivement des dents (42; 43) en forme de peigne venant s'engager dans les entredents affectées (40; 41) de la barre de guidage (26) et de la barre porte-lame (27) du dispositif de cisaillage (4) pouvant sensiblement atteindre le plan d'avance (O), le mouvement de la barre de support mobile (32) pouvant être couplé à celui de la barre porte-lame (27) pour le tronçonnage des barres porteuses (T) et les dents (38, 39) de la barre de guidage (26) et de la barre porte-lame (27) pouvant s'appuyer sur les dents correspondantes (42; 43) des barres de support (31; 32).

3. Dispositif de cisaillage selon la revendication 2, caractérisé en ce que les bords inférieurs (42c; 43c) des dents (42; 43) des barres de support (31; 32) forment les surfaces d'appui pour les barres porteuses (T) lors du tronçonnage de celles-ci.

4. Dispositif de cisaillage selon la revendication 2 ou 3, caractérisé en ce que la barre de support fixe (31) présente un dispositif (44) pour le réglage de sa position par rapport à la barre de guidage (26) et en ce que la barre de support mobile (32) comporte un dispositif de réglage et de fixation (45, 46, 47, 48) pour le réglage et la fixation de sa position par rapport à la barre de support fixe (31) et à la barre porte-lame (27).

5. Dispositif de cisaillage selon l'une des revendications 1 à 4, caractérisé en ce que le premier dispositif d'avance est conçu sous forme de ligne à rouleaux (2) commandable, réglable en hauteur, doté de rouleaux porteurs (6) librement mobiles dans la direction de l'avance.

6. Dispositif de cisaillage selon l'une des revendications 1 à 5, caractérisé en ce que pour l'évacuation de tronçons résiduels de grille (A) produits lors de la coupe à longueur de la grille (R) est prévu un système de manutention (56) qui est au moins déplaçable vers l'avant jusque dans le plan de coupe (S-S).

7. Dispositif de cisaillage selon la revendication 6, caractérisé en ce que le système de manutention est constitué par une bande transporteuse (56) entraînée, disposée sur un chariot mobile (55) qui se déplace le long d'une voie de roulement (54) solidaire d'un châssis (22) du dispositif de cisaillage (4) et peut être commandé au moyen du système de commande.
